# EUROPEAN PATENT SPECIFICATION

(11) **EP 3 845 396 B1**
(45) Date of publication and mention of the grant of the patent: **21.08.2024**
(21) Application number: 19864019.5
(22) Date of filing: 20.09.2019
(51) Int. Cl.: B60C 11/00, B60C 9/00, B60C 9/22, B60C 9/20, B60C 9/28, B60C 11/01, B60C 11/03, B60C 13/00

(54) **PNEUMATIC TIRE**
LUFTREIFEN
PNEUMATIQUE

(30) Priority: 25.09.2018 JP 2018179396
(43) Date of publication of application: 07.07.2021
(73) Proprietor: Sumitomo Rubber Industries, Ltd., Kobe-shi, Hyogo 651-0072 (JP)
(72) Inventor: MUNEZAWA, Goro, Kobe-shi, Hyogo 651-0072 (JP)
(74) Representative: Manitz Finsterwald Patent- und Rechtsanwaltspartnerschaft mbB
(86) International application number: PCT/JP2019/037010
(87) International publication number: WO 2020/066906

(56) References cited:
- WO-A1-2006/134776
- WO-A1-2019/111717
- WO-A1-99/14065
- JP-A- 2004 058 755
- JP-A- 2012 136 188
- JP-A- 2013 173 395
- JP-A- 2016 041 549
- JP-A- H03 121 905
- JP-A- H10 181 309
- US-A1- 2005 061 410
- US-B1- 6 321 180

## Description

### TECHNICAL FIELD

The present invention relates to pneumatic tires. Specifically, the present invention relates to pneumatic tires that are mounted to passenger cars.

### BACKGROUND ART

A tire comes into contact with a road surface at a tread thereof. Due to the contact, the tire is pressed against the road surface. Since the tire rotates, deformation and restoration are repeated in the tire.

In a running state, centrifugal force acts on the tire. The centrifugal force bulges the tread radially outward. During high speed running, large centrifugal force acts on the tire, so that damage such as looseness may occur at an end portion of a belt.

There is a band which is a member of the tire. The band is normally formed by spirally winding a band-shaped body including band cords. The band inhibits bulging of the tread. From the viewpoint of improvement of high-speed durability, various studies have been conducted for the band (for example, PATENT LITERATURE 1).

### CITATION LIST

### [PATENT LITERATURE]

PATENT LITERATURE 1: Japanese Laid-Open Patent Publication No. 2009-46116

A tire according to the preamble of claim 1 is known from JP H03 121905 A. Related tires are described in and JP H10 181309 A and JP 2016 041549 A.

### SUMMARY OF INVENTION

### [TECHNICAL PROBLEM]

As band cords, cords formed from an organic fiber (hereinafter, also referred to as organic fiber cords) are normally used. As the organic fiber cords, for example, cords formed from a nylon fiber, cords formed from a polyester fiber, cords formed from a rayon fiber, and cords formed from an aramid fiber are known.

From the viewpoint of improvement of high-speed durability and reduction of road noise, organic fiber cords having high stiffness, for example, cords formed from a polyester fiber, may be used as band cords.

In the case where cords having high stiffness are used as band cords, there is a concern that an axially outer portion of a band may be stretched more than an axially central portion of the band when a green tire is pressurized and heated in a mold to obtain a tire, and a ground-contact shape may become rounded in the obtained tire. In the tire in which the ground-contact shape is rounded, wear is likely to progress at a portion around the equator plane of the tire. Due to such circumstances, establishment of technology to be able to obtain an appropriate ground-contact shape even when organic fiber cords having high stiffness are used as band cords in order to improve high-speed durability and reduce road noise, thereby inhibiting occurrence of crown wear, that is, occurrence of uneven wear, is required.

The present invention has been made in view of the above circumstances, and an object of the present invention is to provide a pneumatic tire in which improvement of high-speed durability and reduction of road noise are achieved while occurrence of uneven wear is inhibited.

### [SOLUTION TO PROBLEM]

The problem is solved by a tire having the features of claim 1. Sub-claims are directed to preferred embodiments.

### [ADVANTAGEOUS EFFECTS OF INVENTION]

According to the present invention, a pneumatic tire in which improvement of high-speed durability and reduction of road noise are achieved while occurrence of uneven wear is inhibited, is obtained.

### BRIEF DESCRIPTION OF DRAWINGS

FIG. 1 is a cross-sectional view showing a part of a pneumatic tire according to an embodiment of the present invention.
FIG. 2 is a perspective view showing a band-shaped body prepared for forming a band of the tire.
FIG. 3 is an explanatory diagram illustrating a profile of the outer circumferential surface of the tire.
FIG. 4 is an explanatory diagram illustrating the shape of a ground-contact surface of the tire.

### DESCRIPTION OF EMBODIMENTS

The following will describe in detail the present invention based on preferred embodiments with appropriate reference to the drawings.

In the present invention, a state where a tire is mounted on a normal rim, the internal pressure of the tire is adjusted to a normal internal pressure, and no load is applied to the tire is referred to as a normal state. In the present invention, unless otherwise specified, the dimensions and angles of the tire and each component of the tire are measured in the normal state.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures. The normal internal pressure of a tire for a passenger car is, for example, 180 kPa.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads. The normal load of a tire for a passenger car is, for example, a load corresponding to 88% of the above load.

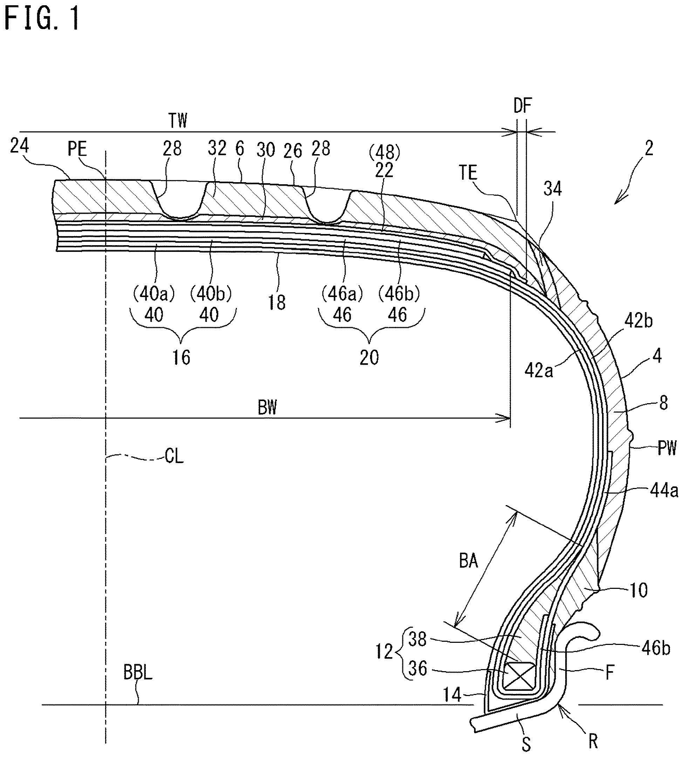

FIG. 1 shows a part of a pneumatic tire 2 (hereinafter, sometimes referred to simply as "tire 2") according to an embodiment of the present invention. The tire 2 is mounted to a passenger car. In FIG. 1, the tire 2 is mounted on a rim R (normal rim). The internal pressure of the tire 2 is adjusted by filling the tire 2 with air.

FIG. 1 shows a part of a cross-section of the tire 2 along a plane including the rotation axis of the tire 2. In FIG. 1, the right-left direction is the axial direction of the tire 2, and the up-down direction is the radial direction of the tire 2. The direction perpendicular to the surface of the sheet of FIG. 1 is the circumferential direction of the tire 2. In FIG. 1, an alternate long and short dash line CL represents the equator plane of the tire 2.

In FIG. 1, a solid line BBL is a bead base line extending in the axial direction. This bead base line is a line that defines the rim diameter (see JATMA or the like) of the rim R.

In FIG. 1, reference character PW represents an axially outer end of the tire 2. The outer end PW is specified on the basis of a virtual side surface obtained on the assumption that decorations such as patterns and characters are not present on a side surface 4 of the tire 2. The distance in the axial direction from one outer end PW to the other outer end PW is the maximum width of the tire 2, that is, the cross-sectional width (see JATMA or the like) of the tire 2. The outer end PW is a position at which the tire 2 has the maximum width (hereinafter, sometimes referred to as a maximum width position of the tire 2).

The tire 2 includes a tread 6, a pair of sidewalls 8, a pair of clinches 10, a pair of beads 12, a pair of chafers 14, a carcass 16, an inner liner 18, a belt 20, and a band 22.

The tread 6 comes into contact with a road surface at an outer circumferential surface 24 thereof. The outer circumferential surface 24 includes a tread surface 26. Grooves 28 are formed on the outer circumferential surface 24.

In FIG. 1, reference character PE represents the equator of the tire 2. The equator PE corresponds to the point of intersection of the tread surface 26 and the equator plane.

In the tire 2, the tread 6 includes a base portion 30 and a cap portion 32 located radially outward of the base portion 30. The base portion 30 is formed from a crosslinked rubber for which adhesion is taken into consideration. The cap portion 32 is formed from a crosslinked rubber for which wear resistance and grip performance are taken into consideration.

Each sidewall 8 is located radially inward of an end of the tread 6. The sidewall 8 extends radially inward along the carcass 16 from the end of the tread 6. The sidewall 8 is formed from a crosslinked rubber. The sidewall 8 protects the carcass 16.

As shown in FIG. 1, a wing 34 is provided between the sidewall 8 and the above-described tread 6 in the tire 2. The wing 34 is formed from a crosslinked rubber for which adhesion is taken into consideration. In the tire 2, the tread 6 and the sidewall 8 are connected to each other via the wing 34.

Each clinch 10 is located inward of the sidewall 8 in the radial direction. As shown in FIG. 1, a part of the clinch 10 comes into contact with a flange F of the rim R. The clinch 10 is formed from a crosslinked rubber for which wear resistance is taken into consideration.

Each bead 12 is located axially inward of the clinch 10. The bead 12 is located radially inward of the sidewall 8. The bead 12 includes a core 36 and an apex 38. The core 36 includes a wire made of steel. The apex 38 is located radially outward of the core 36. In the cross-section of the tire 2 shown in FIG. 1, the apex 38 is tapered outward in the radial direction. In the tire 2, the apex 38 is formed from a crosslinked rubber having high stiffness.

In FIG. 1, a double-headed arrow BA represents the length of the apex 38. In the tire 2, the length BA of the apex 38 is not less than 10 mm and not greater than 45 mm. In the tire 2, the length of the apex 38 may be set in the range of 5 mm to 15 mm. In this case, a member formed from a crosslinked rubber having high stiffness can be newly added between the clinch 10 and the carcass 16.

Each chafer 14 is located radially inward of the bead 12. As shown in FIG. 1, at least a part of the chafer 14 comes into contact with a seat S of the rim R. In the tire 2, the chafer 14 includes a fabric and a rubber with which the fabric is impregnated.

The carcass 16 is located inward of the tread 6, the pair of sidewalls 8, and the pair of clinches 10. The carcass 16 extends from one bead 12 toward the other bead 12. The carcass 16 includes at least one carcass ply 40. The carcass 16 of the tire 2 includes two carcass plies 40.

Each carcass ply 40 includes a large number of carcass cords aligned with each other, which are not shown. Each carcass cord intersects the equator plane. In the tire 2, the angle of each carcass cord relative to the equator plane is not less than 70° and not greater than 90°. In the tire 2, a cord formed from an organic fiber is used as each carcass cord. Examples of the organic fiber include nylon fibers, polyester fibers, rayon fibers, and aramid fibers.

In the tire 2, each of the two carcass plies 40 is turned up around the right and left cores 36.

A carcass ply 40a located at the inner side, that is, a first carcass ply 40a, has: a first main body portion 42a that extends on and between one core 36 and the other core 36; and a pair of first turned-up portions 44a that are connected to the first main body portion 42a and turned up around the respective cores 36 from the inner side toward the outer side in the axial direction. In the tire 2, an end of each first turned-up portion 44a is located outward of the maximum width position PW in the radial direction. In the tire 2, the distance in the radial direction from the maximum width position PW to the end of each first turned-up portion 44a is preferably not less than 1 mm and not greater than 5 mm.

A carcass ply 40b located at the outer side, that is, a second carcass ply 40b, has: a second main body portion 42b that extends on and between one core 36 and the other core 36; and a pair of second turned-up portions 44b that are connected to the second main body portion 42b and turned up around the respective cores 36 from the inner side toward the outer side in the axial direction. In the tire 2, an end of each second turned-up portion 44b is located between the core 36 and the outer end of the apex 38 in the radial direction.

The inner liner 18 is located inward of the carcass 16. The inner liner 18 forms an inner surface of the tire 2. The inner liner 18 is formed from a crosslinked rubber that has an excellent air blocking property. The inner liner 18 maintains the internal pressure of the tire 2.

The belt 20 is layered over the carcass 16 at the radially inner side of the tread 6. The belt 20 is located radially inward of the band 22. In FIG. 1, a double-headed arrow BW represents the width in the axial direction of the belt 20. A double-headed arrow TW represents the width in the axial direction of the tread 6.

In the tire 2, the width BW of the belt 20 is set in the range of 0.85 times to 1.05 times the width TW of the tread 6 in the axial direction. The width BW of the belt 20 and the width TW of the tread 6 are measured in a later-described reference state of the tire 2.

In the tire 2, the belt 20 includes at least two layers 46 stacked in the radial direction. As shown in FIG. 1, the belt 20 of the tire 2 includes two layers 46. In the tire 2, out of the two layers 46, a layer 46a located at the inner side in the radial direction is also referred to as an inner layer 46a, and a layer 46b located at the outer side in the radial direction is also referred to as an outer layer 46b. In the tire 2, as shown in FIG. 1, the width of the inner layer 46a is larger than the width of the outer layer 46b in the axial direction.

Each of the inner layer 46a and the outer layer 46b includes a large number of belt cords aligned with each other, which are not shown. Each belt cord is tilted relative to the equator plane. The angle of each belt cord relative to the equator plane is not less than 10° and not greater than 35°. In the tire 2, the material of the belt cords is steel.

The band 22 is located inward of the tread 6 in the radial direction. The band 22 is located between the tread 6 and the belt 20 in the radial direction. In the tire 2, the band 22 is a full band 48 which covers the entirety of the belt 20.

The band 22 includes a band cord. The band cord is formed from an organic fiber. In the band 22, the band cord extends substantially in the circumferential direction. In the present invention, "substantially in the circumferential direction" means that the angle of the band cord relative to the equator plane is not greater than 5° and preferably not greater than 2.5°. In the tire 2, the number of band cords included per a width of 5 cm of the band 22 is set as appropriate in the range of 20 to 60.

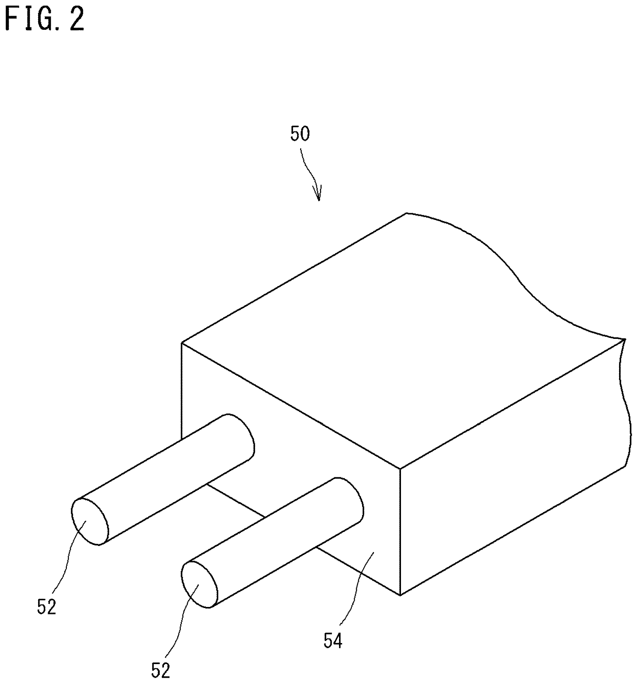

In the tire 2, the band 22 is formed by using a band-shaped body 50 shown in FIG. 2. The band-shaped body 50 includes band cords 52 and a topping rubber 54. In the band-shaped body 50 shown in FIG. 2, two band cords 52 aligned with each other are covered with the topping rubber 54. The number of band cords 52 included in the band-shaped body 50 is determined as appropriate according to the specifications of the tire 2, etc.

As described above, each band cord 52 are formed from an organic fiber. Although not described in detail, in the tire 2, the surface of each band cord 52 is subjected to a surface treatment for adhesion to the topping rubber 54.

In the production of the tire 2, solid band cords 52 are subjected to a dip treatment as a surface treatment. After the dip treatment, the band cords 52 are covered with a green topping rubber 54 to obtain the band-shaped body 50. The conditions for the dip treatment are adjusted as appropriate according to the specifications of the tire 2.

Although not shown, in the production of the tire 2, the above-described band-shaped body 50 is spirally wound on the belt 20 formed in a green tire that is in the middle of formation. Accordingly, the band 22 is formed. Since the band 22 is formed by spirally winding the band-shaped body 50, the band 22 includes the spirally wound band cords 52. Although not shown, adhesive layers based on the above-described dip treatment are present between the band cords 52 and the topping rubber 54.

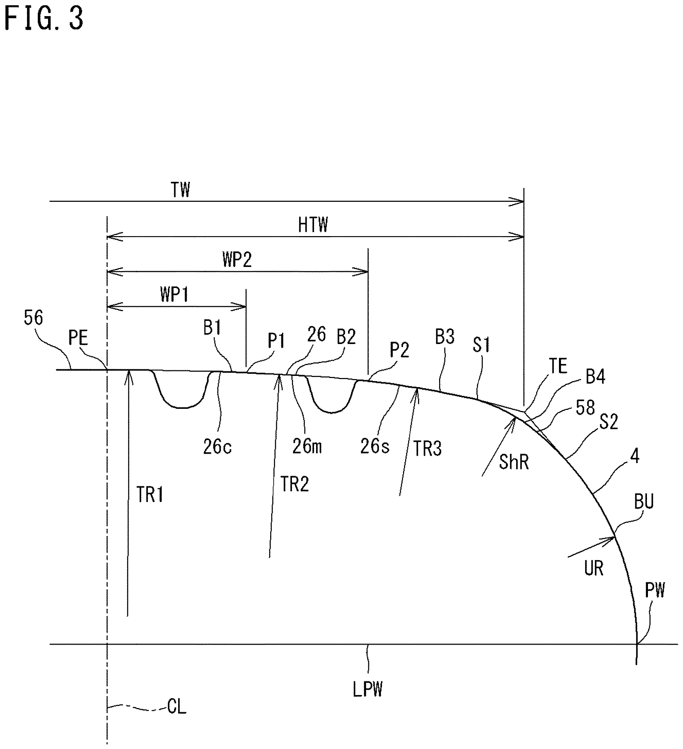

FIG. 3 shows a part of a profile of an outer circumferential surface 56 of the tire 2. In FIG. 3, the right-left direction is the axial direction of the tire 2, and the up-down direction is the radial direction of the tire 2. The direction perpendicular to the surface of the sheet of FIG. 3 is the circumferential direction of the tire 2. The profile of the outer circumferential surface 56 is measured using a profile measuring device (not shown) having a laser displacement meter.

This profile is specified on a cross-section, along a plane including the rotation axis, of the tire 2 in a state (hereinafter, also referred to as a reference state) where the tire 2 is mounted on the rim R (that is, a normal rim), the internal pressure of the tire 2 is adjusted to 10% of the normal internal pressure, and no load is applied to the tire 2. The profile in the reference state corresponds to a profile of the cavity face of a mold (not shown) used to produce the tire 2.

As shown in FIG. 3, the outer circumferential surface 56 of the tire 2 has a profile that is convex radially outward. The outer circumferential surface 56 includes the tread surface 26, a pair of shoulder surfaces 58, and a pair of side surfaces 4. The tread surface 26 extends axially outward from the equator. Each shoulder surface 58 is located outward of the tread surface 26 in the axial direction. Each side surface 4 extends radially inward from the shoulder surface 58.

In FIG. 3, reference character S 1 represents the boundary between the tread surface 26 and the shoulder surface 58. Reference character S2 represents the boundary between the shoulder surface 58 and the side surface 4. The tread surface 26 and the side surface 4 are connected to each other via the shoulder surface 58.

A profile of the shoulder surface 58 is represented by a circular arc having a radius ShR. This circular arc is tangent to a profile of the tread surface 26 at the boundary S1. This circular arc is tangent to a profile of the side surface 4 at the boundary S2. In the tire 2, the magnitude of the radius ShR of the circular arc (hereinafter, also referred to as shoulder circular arc) representing the profile of the shoulder surface 58 is not particularly limited. The radius ShR of the shoulder circular arc is set in a range that is generally applied in the tire 2.

FIG. 3 shows a profile of a zone from the boundary S2 to the maximum width position PW, of the profile of the side surface 4. In the tire 2, the profile of the zone is represented by a circular arc having a radius UR. This circular arc passes through the maximum width position PW. Although not shown, the center of the circular arc is located on a straight line that passes through the maximum width position PW and that extends in the axial direction. In the tire 2, the magnitude of the radius UR of the circular arc (hereinafter, also referred to as upper circular arc) representing the profile of the zone is not particularly limited. The radius UR of the upper circular arc is set in a range that is generally applied in the tire 2. A portion represented by a straight line (hereinafter, a straight portion) may be provided at a radially outer portion of the upper circular arc of the profile of the zone. In this case, the straight portion is connected to the above-described circular arc having the radius ShR.

The radius UR of the upper circular arc included in the profile of the zone from the boundary S2 to the maximum width position PW is specified as follows. In this specification, a position BU that is away radially outward from the maximum width position PW by a predetermined distance is used as a reference position. In the tire 2, the distance in the radial direction from the maximum width position PW to the reference position BU is set to a length that is 40% of the distance in the radial direction from the maximum width position PW to the equator PE.

In specifying the radius UR of the upper circular arc, a virtual circular arc that passes through the maximum width position PW and the reference position BU and that has a center on a straight line LPW that passes through the maximum width position PW and that extends in the axial direction, is drawn. Between the maximum width position PW and the reference position BU, the deviation between the trajectory represented by the virtual circular arc and the profile is measured along a normal line of the virtual circular arc. When this deviation is within 3% of the length of the virtual circular arc connecting the maximum width position PW and the reference position BU, the radius of the virtual circular arc is specified as the radius UR of the upper circular arc.

The profile of the tread surface 26 is divided into at least five zones in the axial direction. This profile includes a center portion 26c located at the inner side in the axial direction, a pair of side portions 26s each located at the outer side in the axial direction, and a pair of middle portions 26m each located between the center portion 26c and the side portion 26s.

In the tire 2, as shown in FIG. 3, the profile of the tread surface 26 includes five zones. The profile of the tread surface 26 is symmetrical about the equator plane.

The center portion 26c is located at the center in the axial direction. The center portion 26c includes the equator PE. In the tire 2, the center portion 26c is represented by a circular arc having a radius TR1.

Each middle portion 26m is located outward of the center portion 26c in the axial direction. In the tire 2, each middle portion 26m is represented by a circular arc having a radius TR2.

Each side portion 26s is located outward of the middle portion 26m in the axial direction. In the tire 2, each side portion 26s is represented by a circular arc having a radius TR3 .

In FIG. 3, reference character P1 represents the boundary between the center portion 26c and the middle portion 26m. The circular arc (hereinafter, also referred to as center circular arc) representing the center portion 26c is tangent to the circular arc (hereinafter, also referred to as middle circular arc) representing the middle portion 26m, at the boundary P1. Reference character P2 represents the boundary between the middle portion 26m and the side portion 26s. The middle circular arc is tangent to the circular arc (hereinafter, also referred to as side circular arc) representing the side portion 26s, at the boundary P2. Furthermore, the side circular arc is tangent to the above-described shoulder circular arc at the boundary S1. In the profile of the outer circumferential surface 56 shown in FIG. 3, the boundary S1 is an end of the tread surface 26.

In the tire 2, the radius TR1 of the center circular arc is specified as follows. In this specification, a position B1 that is away axially outward from the equator PE by a predetermined distance is used as a reference position. In the tire 2, the distance in the axial direction from the equator PE to the reference position B1 is set to a length that is 30% of half the width BW of the belt. When the reference position B 1 overlaps the groove 28, the edge of the groove 28 close to the reference position B 1 is used as the reference position B1.

In specifying the radius TR1 of the center circular arc, a virtual circular arc (hereinafter, also referred to as a first virtual circular arc) that has a center on the equator plane and that passes through the equator PE and a pair of the reference positions B1 is drawn. Between one reference position B 1 and the other reference position B 1, the deviation between the trajectory represented by the first virtual circular arc and the profile of the center portion 26c is measured along a normal line of the first virtual circular arc. When this deviation is within 3% of the length of the first virtual circular arc connecting one reference position B 1 and the other reference position B 1, the radius of the first virtual circular arc is specified as the radius TR1 of the center circular arc. An end of a zone in which the deviation between the trajectory represented by the circular arc having the radius TR1 and the profile of the outer circumferential surface 56 of the tire 2 is within 3% of the length of the first virtual circular arc connecting one reference position B 1 and the other reference position B1, is defined as the above-described boundary P1 between the center portion 26c and the middle portion 26m.

In the tire 2, the radius TR2 of the middle circular arc is specified as follows. In this specification, a position B2 that is away axially outward from the equator PE by a predetermined distance is used as a reference position. In the tire 2, the distance in the axial direction from the equator PE to the reference position B2 is set to a length that is 45% of half the width BW of the belt. When the reference position B2 overlaps the groove 28, the edge of the groove 28 close to the reference position B2 is used as the reference position B2.

In specifying the radius TR2 of the middle circular arc, a virtual circular arc (hereinafter, also referred to as a second virtual circular arc) that has a center on a straight line connecting the center of the center circular arc and the boundary P1 and that passes through the boundary P1 and the reference position B2, is drawn. Between the boundary P1 and the reference position B2, the deviation between the trajectory represented by the second virtual circular arc and the profile of the middle portion 26m is measured along a normal line of the second virtual circular arc. When this deviation is within 3% of the length of the second virtual circular arc connecting the boundary P1 and the reference position B2, the radius of the second virtual circular arc is specified as the radius TR2 of the middle circular arc. An end of a zone in which the deviation between the trajectory represented by the circular arc having the radius TR2 and the profile of the outer circumferential surface 56 of the tire 2 is within 3% of the length of the second virtual circular arc connecting the boundary P1 and the reference position B2, is specified as the above-described boundary P2 between the middle portion 26m and the side portion 26s.

In the tire 2, the radius TR3 of the side circular arc is specified as follows. In this specification, a position B3 that is away axially outward from the equator PE by a predetermined distance is used as a reference position. In the tire 2, the distance in the axial direction from the equator PE to the reference position B3 is set to a length that is 80% of half the width BW of the belt.

In specifying the radius TR3 of the side circular arc, a virtual circular arc (hereinafter, also referred to as a third virtual circular arc) that has a center on a straight line connecting the center of the middle circular arc and the boundary P2 and that passes through the boundary P2 and the reference position B3, is drawn. Between the boundary P2 and the reference position B3, the deviation between the trajectory represented by the third virtual circular arc and the profile of the side portion 26s is measured along a normal line of the third virtual circular arc. When this deviation is within 3% of the length of the third virtual circular arc connecting the boundary P2 and the reference position B3, the radius of the third virtual circular arc is specified as the radius TR3 of the side circular arc. An end of a zone in which the deviation between the trajectory represented by the circular arc having the radius TR3 and the profile of the outer circumferential surface 56 of the tire 2 is within 3% of the length of the third virtual circular arc connecting the boundary P2 and the reference position B3, is specified as the above-described boundary S1 between the tread surface 26 and the shoulder surface 58.

In the tire 2, the radius ShR of the shoulder circular arc is specified as follows. In this specification, a position B4 that is away axially outward from the equator PE by a predetermined distance is used as a reference position. In the tire 2, the distance in the axial direction from the equator PE to the reference position B4 is set to a length that is equal to half the width BW of the belt.

In specifying the radius ShR of the shoulder circular arc, a virtual circular arc (hereinafter, also referred to as a fourth virtual circular arc) that has a center on a straight line connecting the center of the side circular arc and the boundary S1 and that passes through the boundary S1 and the reference position B4, is drawn. Between the boundary S1 and the reference position B4, the deviation between the trajectory represented by the fourth virtual circular arc and the profile of the shoulder surface 58 is measured along a normal line of the fourth virtual circular arc. When this deviation is within 3% of the length of the fourth virtual circular arc connecting the boundary S1 and the reference position B4, the radius of the fourth virtual circular arc is specified as the radius ShR of the shoulder circular arc. An end of a zone in which the deviation between the trajectory represented by the circular arc having the radius ShR and the profile of the outer circumferential surface 56 of the tire 2 is within 3% of the length of the fourth virtual circular arc connecting the boundary S1 and the reference position B4, is specified as the above-described boundary S2 between the shoulder surface 58 and the side surface 4.

In FIG. 3, reference character TE represents a reference point that specifies the width of the tread 6. In the tire 2, the reference point TE is represented by the point of intersection of a line tangent to the profile of the outer circumferential surface 56 at the boundary S1 and a line tangent to the profile of the outer circumferential surface 56 at the boundary S2.

In FIG. 3, a double-headed arrow TW represents the width of the tread 6. The width TW of the tread 6 is represented as the distance in the axial direction from one reference point TE to the other reference point TE. When the internal pressure of the tire 2 shown in FIG. 1 is 10% of the normal internal pressure, the width TW of the tread 6 shown in FIG. 1 agrees with the width TW of the tread 6 shown in FIG. 3.

As described above, in the tire 2, the band 22 includes the band cords 52 extending substantially in the circumferential direction. A load at 4% elongation of each band cord 52 is not less than 60 N. A load at 4% elongation of a cord that is formed from a nylon fiber and that is generally used as each band cord 52 is in the range of 20 N to 30 N. The band cords 52 have stiffness higher than the stiffness of band cords that are generally used in a conventional tire. That is, in the tire 2, cords having high stiffness are used as the band cords 52. The band 22 including the band cords 52 contributes to improvement of high-speed durability and reduction of road noise. In the tire 2, regarding road noise, in particular, road noise at 315 Hz is effectively reduced.

In the present invention, the load at 4% elongation of each band cord 52 is measured according to the test method for "load at constant elongation" specified in JIS L 1017 (Test methods for chemical fiber tire cords).

In the tire 2, in the profile of the outer circumferential surface 56, specifically, in the profile of the tread surface 26 which is a part of the outer circumferential surface 56, the radius TR1 of the center circular arc representing the center portion is larger than the radius TR2 of the middle circular arc representing the middle portion, and the radius TR2 of the middle circular arc is larger than the radius TR3 of the side circular arc representing the side portion. In the tire 2, in particular, the ratio of the radius TR1 of the center circular arc to the width TW of the tread 6 is not less than 4.94 and not greater than 5.21. In a conventional tire, the ratio of the radius of the center circular arc to the width of the tread is about 4.4, and the radius TR1 of the center circular arc in the tire 2 is larger than the radius of the center circular arc in the conventional tire.

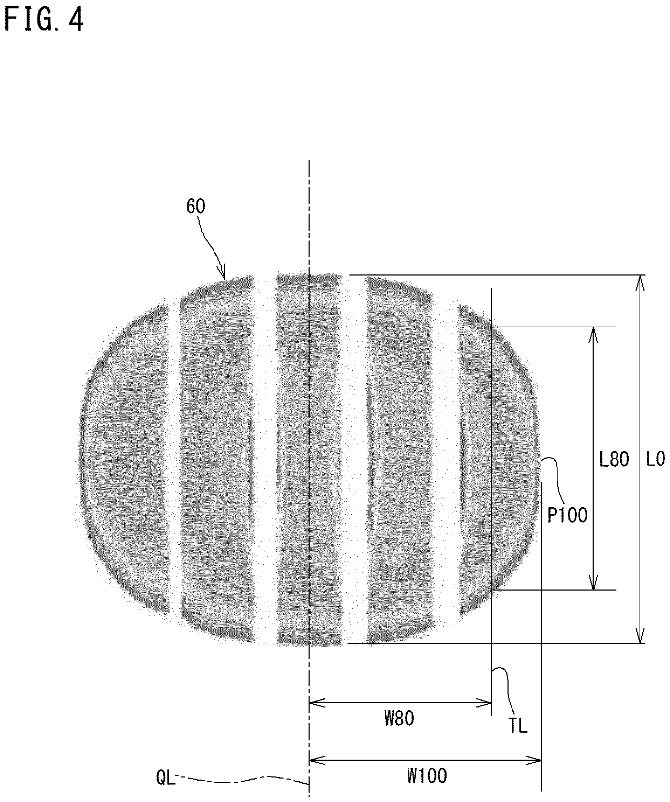

FIG. 4 shows the shape of a ground-contact surface 60 of the tire 2. In FIG. 4, the up-down direction corresponds to the circumferential direction of the tire 2, and the right-left direction corresponds to the axial direction of the tire 2. The direction perpendicular to the surface of the sheet of FIG. 4 corresponds to the radial direction of the tire 2. The ground-contact surface 60 is obtained by applying the normal load to the tire 2 in the normal state and pressing the tire 2 against the road surface, using a tire ground-contact shape measuring device (not shown). To obtain the ground-contact surface 60, the tire 2 is placed such that the axial direction thereof is parallel to the road surface, and the normal load is applied to the tire 2 in a direction perpendicular to the road surface.

In FIG. 4, an alternate long and short dash line QL represents a plane (hereinafter, also referred to as a first virtual plane) that is located at the axial center of the ground-contact surface 60 and that is parallel to the equator plane of the tire 2. A double-headed arrow L0 represents the length of the line of intersection of the first virtual plane QL and the ground-contact surface 60.

In FIG. 4, reference character P100 represents an axially outer end of the ground-contact surface 60. A solid line TL represents a plane (hereinafter, also referred to as a second virtual plane) that is between the above-described first virtual plane QL and the outer end P100 and parallel to the equator plane of the tire 2. A double-headed arrow L80 represents the length of the line of intersection of the second virtual plane TL and the ground-contact surface 60.

In FIG. 4, a double-headed arrow W100 represents the distance in the axial direction from the first virtual plane QL to the outer end P100. A double-headed arrow W80 represents the distance in the axial direction from the first virtual plane QL to the second virtual plane TL.

In the present invention, the shape of the ground-contact surface 60 is considered using a shape index represented by the ratio of the length L0 to the length L80 with the ratio of the distance W80 to the distance W100 being set to be 0.8. This shape index is also referred to as FSF80. This shape index is represented by the ratio of the length L0 of the ground-contact surface 60 at the axial center QL of the ground-contact surface 60 to the length L80 of the ground-contact surface 60 at the position TL at which the distance from the axial center QL of the ground-contact surface 60 is 0.8 times the distance W100 in the axial direction from the axial center QL of the ground-contact surface 60 to the axially outer end P100 of the ground-contact surface 60, on the ground-contact surface 60 obtained when the tire 2 is mounted on the normal rim, the internal pressure of the tire 2 is adjusted to the normal internal pressure, the normal load is applied to the tire 2, and the tire 2 is brought into contact with a flat road surface at a camber angle of 0°. The shape index having a larger value represents that the ground-contact surface 60 is rounder.

The present inventor has confirmed that, in a tire (hereinafter, a comparative tire) in which a tread surface profile of a conventional tire is kept and each band cord of the conventional tire is changed from a cord having a load at 4% elongation within the range of 20 to 30 N to a cord having a load at 4% elongation of 60 N or greater, the shape index of the ground-contact surface is increased from that of the conventional tire, and that, in the tire 2 obtained by correcting the tread surface profile of the comparative tire as described above, that is, in the tire 2 shown in FIG. 1 to FIG. 3, the shape index of the ground-contact surface 60 is decreased from that of the comparative tire. Specifically, whereas the shape index of later-described Comparative Example 3 as the comparative tire is 1.49, the shape index of the tire 2 is not less than 1.40 and not greater than 1.44. That is, in the tire 2, the ground-contact surface 60 is less likely to be rounded, although cords having high stiffness are used.

In the tire 2, rounding of the ground-contact shape, which is confirmed when cords having high stiffness are used as band cords in the conventional tire, is inhibited. In the tire 2, an appropriate ground-contact shape is obtained, and thus occurrence of crown wear, that is, occurrence of uneven wear, is inhibited. The tire 2 has good wear resistance.

In the tire 2, improvement of high-speed durability and reduction of road noise are achieved while occurrence of uneven wear is inhibited.

In the tire 2, the radius TR2 of the middle circular arc representing the middle portion 26m is preferably not less than half the radius TR1 of the center circular arc representing the center portion 26c. Accordingly, rounding of the ground-contact shape of the tire 2 is effectively inhibited. From this viewpoint, the ratio of the radius TR2 to the radius TR1 is more preferably not less than 0.51. From the viewpoint of maintaining good wear resistance, this ratio is preferably not greater than 0.53 and more preferably not greater than 0.52.

In the tire 2, the ratio of the radius TR3 of the side circular arc representing the side portion 26s, to the radius TR1 of the center circular arc representing the center portion 26c, is preferably not less than 0.16 and preferably not greater than 0.23. Accordingly, in the tire 2, rounding of the ground-contact shape of the tire 2 is effectively inhibited. The tire 2 has good wear resistance.

In the tire 2, from the viewpoint of effectively inhibiting rounding of the ground-contact shape of the tire 2, the radius TR1 of the center circular arc representing the center portion 26c is preferably not less than 890 mm, more preferably not less than 930 mm, and further preferably not less than 950 mm. The radius TR1 is preferably not greater than 1000 mm, more preferably not greater than 980 mm, and further preferably not greater than 960 mm.

In FIG. 3, a double-headed arrow HTW represents the distance in the axial direction from the equator PE to the reference point TE. The distance HTW is half the width TW of the tread 6. A double-headed arrow WP1 represents the distance in the axial direction from the equator PE to the boundary P1 between the center portion 26c and the middle portion 26m. A double-headed arrow WP2 represents the distance in the axial direction from the equator PE to the boundary P2 between the middle portion 26m and the side portion 26s.

In the tire 2, the ratio of the distance WP1 in the axial direction from the equator PE to the boundary P1 between the center portion 26c and the middle portion 26m, to HTW which is half the width TW of the tread 6, is preferably not less than 0.32 and more preferably not less than 0.33. This ratio is preferably not greater than 0.43 and more preferably not greater than 0.37. Accordingly, in the tire 2, rounding of the ground-contact shape of the tire 2 is effectively inhibited. The tire 2 has good wear resistance.

In the tire 2, the ratio of the distance WP2 in the axial direction from the equator PE to the boundary P2 between the middle portion 26m and the side portion 26s, to HTW which is half the width TW of the tread 6, is preferably not less than 0.53 and more preferably not less than 0.58. This ratio is preferably not greater than 0.71 and more preferably not greater than 0.67. Accordingly, in the tire 2, rounding of the ground-contact shape of the tire 2 is effectively inhibited. The tire 2 has good wear resistance.

As described above, in the tire 2, the band 22 is the full band 48 which covers the entirety of the belt 20. As shown in FIG. 1, the full band 48 has a width larger than the width TW of the tread 6. The full band 48 contributes to inhibition of rounding of the ground-contact shape. From this viewpoint, in the tire 2, the band 22 is the full band 48 which covers the entirety of the belt 20, and the full band 48 has a width larger than the width TW of the tread 6. In particular, when the width BW of the belt 20 is smaller than the width TW of the tread 6 as shown in FIG. 1, the full band 48 having a width larger than the width TW of the tread 6 effectively contributes to inhibition of rounding of the ground-contact shape. The width of the full band 48 is specified in the above-described reference state.

In FIG. 1, reference character DF represents the distance in the axial direction from the reference point TE of the width TW of the tread 6 to an end of the full band 48. In the tire 2, from the viewpoint that the full band 48 effectively contributes to inhibition of rounding of the ground-contact shape, the distance DF is preferably not less than 2 mm and preferably not greater than 10 mm.

In the tire 2, each band cord 52 is a cord formed from an organic fiber. From the viewpoint of having appropriately high stiffness and contributing to improvement of high-speed durability and reduction of road noise, each band cord 52 is a cord formed from a polyethylene terephthalate fiber.

As described above, in this tire, the load at 4% elongation of each band cord 52 is not less than 60 N. From the viewpoint of improvement of high-speed durability and reduction of road noise, the load at 4% elongation of each band cord 52 is preferably not less than 65 N and more preferably not less than 70 N.

As described above, according to the present invention, the pneumatic tire 2 in which improvement of high-speed durability and reduction of road noise are achieved while occurrence of uneven wear is inhibited, is obtained. In particular, in the tire 2 having a nominal cross-sectional width of 195 mm or greater, occurrence of uneven wear is effectively inhibited, and improvement of high-speed durability and reduction of road noise are achieved. The "nominal cross-sectional width" is a "nominal cross-sectional width" included in the "tyre size" specified in JIS D4202 "Automobile tyres-Designation and dimensions".

The embodiments disclosed above are merely illustrative in all aspects and are not restrictive. The technical scope of the present invention is not limited to the above-described embodiments, but can be modified within the scope of the appended claims.

### EXAMPLES

The following will describe the present invention in further detail by means of examples, etc., but the present invention is not limited to these examples but to the scope defined by the claims.

### [Example 1]

A pneumatic tire for a passenger car (tire size = 215/55R17) having the basic structure shown in FIG. 1 to FIG. 3 and having specifications shown in Table 1 below was obtained.

In Example 1, a cord formed from a polyethylene terephthalate fiber was used as each band cord. This is indicated as "PET" in the cell for "material" of band cord in the table. The load at 4% elongation of the band cord was 70.3 N.

Regarding the profile of the tread surface of Example 1, the ratio (TR1/TW) of the radius TR1 of the center circular arc to the width TW of the tread was set to 5.05. The ratio (TR2/TR1) of the radius TR2 of the middle circular arc to the radius TR1 of the center circular arc was set to 0.52. The ratio (TR3/TR1) of the radius TR3 of the side circular arc to the radius TR1 of the center circular arc was set to 0.22. Furthermore, the ratio (WP1/HTW) of the distance WP1 in the axial direction from the equator of the tire to the boundary P1 between the center portion and the middle portion, to HTW which is half the width TW of the tread, was set to 0.35. The ratio (WP2/HTW) of the distance WP2 in the axial direction from the equator of the tire to the boundary P2 between the middle portion and the side portion, to HTW which is half the width TW of the tread, was set to 0.64. The width TW of the tread was set to 188.2 mm in the reference state.

### [Comparative Example 1]

Comparative Example 1 is a conventional tire. In Comparative Example 1, a cord formed from a nylon fiber was used as each band cord. This is indicated as "N" in the cell for "material" of band cord in the table. The load at 4% elongation of the band cord was 29.0 N.

Regarding the profile of the tread surface of Comparative Example 1, the ratio (TR1/TW) was set to 4.35. The ratio (TR2/TR1) was set to 0.47. The ratio (TR3/TR1) was set to 0.21. Furthermore, the ratio (WP1/HTW) was set to 0.35. The ratio (WP2/HTW) was set to 0.64. The width TW of the tread was set to 188.2 mm in the reference state.

### [Comparative Examples 2 and 3]

Tires of Comparative Examples 2 and 3 were obtained in the same manner as Comparative Example 1, except that the band cords were changed. In Comparative Example 2, a hybrid cord formed using a cord formed from a nylon fiber and a cord formed from an aramid fiber was used as each band cord. This is indicated as "HB" in the cell for "material" of band cord in the table. The load at 4% elongation of the band cord was 51.9 N. In Comparative Example 3, a cord that is formed from a polyethylene terephthalate fiber and that is the same as in Example 1 was used as each band cord.

### [Example 2]

A tire of Example 2 was obtained in the same manner as Example 1, except that the ratio (TR3/TR1) was set as shown in Table 1 below.

### [Examples 3 to 5 and Comparative Examples 4 and 5]

Tires of Examples 3 to 5 and Comparative Examples 4 and 5 were obtained in the same manner as Example 1, except that the radius TR1 of the center circular arc was changed such that the ratio (TR1/TW) and the ratio (TR2/TR1) were set as shown in Table 2 below.

### [Examples 6 to 8]

Tires of Examples 6 to 8 were obtained in the same manner as Example 1, except that the radius TR2 of the middle circular arc was changed such that the ratio (TR2/TR1) was set as shown in Table 3 below.

### [Examples 9 to 12]

Tires of Examples 9 to 12 were obtained in the same manner as Example 1, except that the distance WP1 in the axial direction was changed such that the ratio (WP1/HTW) was set as shown in Table 4 below.

### [Examples 13 to 16]

Tires of Examples 13 to 16 were obtained in the same manner as Example 1, except that the distance WP2 in the axial direction was changed such that the ratio (WP2/HTW) was set as shown in Table 5 below.

### [Ground-Contact Shape]

Tires were fitted onto rims (rim size = 7J) and inflated with air to adjust the internal pressure of each tire to 230 kPa. After the adjustment, a load of 4.62 kN was applied to each tire, and the tire was brought into contact with a road surface at a camber angle of 0°. As a result, a transfer diagram of a ground-contact surface was obtained. The ratio (L0/L80), which is the shape index of the ground-contact surface, was obtained based on this transfer diagram. The result is shown in Tables 1 to 5 below. A higher value represents that the ground-contact shape is rounder.

### [Wear Resistance]

Tires were fitted onto rims (rim size = 7J) and inflated with air to adjust the internal pressure of each tire to 230 kPa. After the adjustment, the tires were mounted to all the wheels of a test vehicle (passenger car). After running on a test course having a dry asphalt road surface for 5,000 km, the state of occurrence of crown wear was confirmed. The groove depths of the circumferential grooves were measured to obtain a wear amount. The result is shown as an index in Tables 1 to 5 below. A higher value represents that the wear resistance is better.

### [High-Speed Durability]

Tires were fitted onto rims (rim size = 7J) and inflated with air to adjust the internal pressure of each tire to 300 kPa. After the adjustment, each tire was mounted to a drum tester. A test by a step speed method was carried out according to ECE30. The running speed was sequentially increased, and the speed and the time when the tire was broken were measured. The result is shown as an index in Tables 1 to 5 below. A higher value represents that the high-speed durability is better.

### [Road Noise]

Tires were fitted onto rims (rim size = 7J) and inflated with air to adjust the internal pressure of each tire to 230 kPa. After the adjustment, the tires were mounted to all the wheels of a test vehicle (passenger car). The test vehicle was caused to run on an asphalt road surface having a high roughness at a speed of 60 km/h. A level (dB) of noise in a 315 Hz band at a driver's seat during the running was measured by a sound collecting microphone. The measured value is shown as an index in Tables 1 to 5 below. A higher value represents that the road noise is lower.

**[Table 1]**

| | | Comparative Example 1 | Comparative Example 2 | Comparative Example 3 | Example 2 | Example 1 |
|---|---|---|---|---|---|---|
| Band cord | Material | N | HB | PET | PET | PET |
| | Load [N] | 29.0 | 51.9 | 70.3 | 70.3 | 70.3 |
| Profile | TR1/TW [-] | 4.35 | 4.35 | 4.35 | 5.05 | 5.05 |
| | TR2/TR1 [-] | 0.47 | 0.47 | 0.47 | 0.52 | 0.52 |
| | TR3/TR1 [-] | 0.21 | 0.21 | 0.21 | 0.22 | 0.18 |
| | WP1/HTW [-] | 0.35 | 0.35 | 0.35 | 0.35 | 0.35 |
| | WP2/HTW [-] | 0.64 | 0.64 | 0.64 | 0.64 | 0.64 |
| L0/L80 [-] | | 1.24 | 1.38 | 1.49 | 1.41 | 1.40 |
| Wear resistance | | 100 | 98 | 90 | 98 | 98 |
| High-speed durability | | 100 | 103 | 100 | 110 | 110 |
| Road noise | | 100 | 103 | 100 | 110 | 110 |

**[Table 2]**

| | | Comparative Example 4 | Example 3 | Example 4 | Example 5 | Comparative Example 5 |
|---|---|---|---|---|---|---|
| Band cord | Material | PET | PET | PET | PET | PET |
| | Load [N] | 70.3 | 70.3 | 70.3 | 70.3 | 70.3 |
| Profile | TR1/TW [-] | 4.84 | 4.94 | 5.10 | 5.21 | 5.31 |
| | TR2/TR1 [-] | 0.54 | 0.53 | 0.51 | 0.50 | 0.49 |
| | TR3/TR1 [-] | 0.19 | 0.18 | 0.18 | 0.17 | 0.17 |
| | WP1/HTW [-] | 0.35 | 0.35 | 0.35 | 0.35 | 0.35 |
| | WP2/HTW [-] | 0.64 | 0.64 | 0.64 | 0.64 | 0.64 |
| L0/L80 [-] | | 1.47 | 1.40 | 1.40 | 1.41 | 1.46 |
| Wear resistance | | 92 | 98 | 98 | 97 | 93 |
| High-speed durability | | 110 | 110 | 110 | 110 | 110 |
| Road noise | | 110 | 110 | 110 | 110 | 110 |

**[Table 3]**

| | | Example 6 | Example 7 | Example 8 |
|---|---|---|---|---|
| Band cord | Material | PET | PET | PET |
| | Load [N] | 70.3 | 70.3 | 70.3 |
| Profile | TR1/TW [-] | 5.05 | 5.05 | 5.05 |
| | TR2/TR1 [-] | 0.49 | 0.51 | 0.53 |
| | TR3/TR1 [-] | 0.18 | 0.18 | 0.18 |
| | WP1/HTW [-] | 0.35 | 0.35 | 0.35 |
| | WP2/HTW [-] | 0.64 | 0.64 | 0.64 |
| L0/L80 [-] | | 1.44 | 1.40 | 1.43 |
| Wear resistance | | 96 | 98 | 96 |
| High-speed durability | | 110 | 110 | 110 |
| Road noise | | 110 | 110 | 110 |

**[Table 4]**

| | | Example 9 | Example 10 | Example 11 | Example 12 |
|---|---|---|---|---|---|
| Band cord | Material | PET | PET | PET | PET |
| | Load [N] | 70.3 | 70.3 | 70.3 | 70.3 |
| Profile | TR1/TW [-] | 5.05 | 5.05 | 5.05 | 5.05 |
| | TR2/TR1 [-] | 0.52 | 0.52 | 0.52 | 0.52 |
| | TR3/TR1 [-] | 0.18 | 0.18 | 0.18 | 0.18 |
| | WP1/HTW [-] | 0.32 | 0.33 | 0.37 | 0.43 |
| | WP2/HTW [-] | 0.64 | 0.64 | 0.64 | 0.64 |
| L0/L80 [-] | | 1.43 | 1.40 | 1.40 | 1.44 |
| Wear resistance | | 96 | 98 | 98 | 96 |
| High-speed durability | | 110 | 110 | 110 | 110 |
| Road noise | | 110 | 110 | 110 | 110 |

**[Table 5]**

| | | Example 13 | Example 14 | Example 15 | Example 16 |
|---|---|---|---|---|---|
| Band cord | Material | PET | PET | PET | PET |
| | Load [N] | 70.3 | 70.3 | 70.3 | 70.3 |
| Profile | TR1/TW [-] | 5.05 | 5.05 | 5.05 | 5.05 |
| | TR2/TR1 [-] | 0.52 | 0.52 | 0.52 | 0.52 |
| | TR3/TR1 [-] | 0.18 | 0.18 | 0.18 | 0.18 |
| | WP1/HTW [-] | 0.35 | 0.35 | 0.35 | 0.35 |
| | WP2/HTW [-] | 0.53 | 0.58 | 0.67 | 0.71 |
| L0/L80 [-] | | 1.44 | 1.40 | 1.40 | 1.43 |
| Wear resistance | | 96 | 98 | 98 | 96 |
| High-speed durability | | 110 | 110 | 110 | 110 |
| Road noise | | 110 | 110 | 110 | 110 |

As shown in Tables 1 to 5, in the Examples, improvement of high-speed durability and reduction of road noise are achieved while reduction of wear resistance, that is, occurrence of uneven wear, is inhibited. The Examples have better evaluations than the Comparative Examples. From the evaluation results, advantages of the present invention are clear.

### INDUSTRIAL APPLICABILITY

The above-described technology regarding the band and the tread surface profile can also be applied to various tires.

### REFERENCE SIGNS LIST

- 2: tire
- 4: side surface
- 6: tread
- 8: sidewall
- 12: bead
- 16: carcass
- 20: belt
- 22: band
- 26: tread surface
- 26c: center portion
- 26s: side portion
- 26m: middle portion
- 40: carcass ply
- 46a: inner layer
- 46b: outer layer
- 48: full band
- 50: band-shaped body
- 52: band cord
- 56: outer circumferential surface of tire 2
- 58: shoulder surface
- 60: ground-contact surface

## Claims

1. A pneumatic tire (2) comprising:
a tread (6) that comes into contact with a road surface;
a band (22) located radially inward of the tread (6); and
a belt (20) located radially inward of the band (22) and including at least two layers (46a, 46b) stacked in a radial direction, wherein
each layer (46a, 46b) included in the belt (20) includes a large number of belt cords aligned with each other,
the band (22) includes a band cord (52) extending substantially in a circumferential direction,
the band (22) is a full band (48) that covers an entirety of the belt (20),
on a cross-section, along a plane including a rotation axis, of the tire (2) in a state where the tire (2) is mounted on a normal rim, an internal pressure of the tire (2) is adjusted to 10% of a normal internal pressure, and no load is applied to the tire, wherein the normal rim means a rim specified in a standard on which the tire (2) is based and the normal internal pressure means an internal pressure specified in the standard on which the tire (2) is based,
an outer circumferential surface of the tire (2) has a profile that is convex radially outward,
the profile includes a center portion (26c) including an equator (PE) of the tire (2), a pair of middle portions (26m) each located outward of the center portion (26c) in an axial direction, and a pair of side portions (26s) located outward of the middle portions (26m) in the axial direction, respectively,
the center portion (26c) is represented by a circular arc having a radius TR1, each of the middle portions (26m) is represented by a circular arc having a radius TR2 smaller than the radius TR1, and each of the side portions (26s) is represented by a circular arc having a radius TR3 smaller than the radius TR2, and
a ratio of the radius TR1 of the circular arc representing the center portion (26c), to a width (TW) of the tread (6), is not less than 4.94 and not greater than 5.21,
**characterized in that**
the full band (48) has a width larger than the width (TW) of the tread (2),
the band cord (52) is a cord formed from a polyethylene terephthalate fiber and
a load at 4% elongation of the band cord (52) is not less than 60 N, wherein the load at 4% elongation of each band cord (52) is measured according to the test method for "load at constant elongation" specified in JIS L 1017.

2. The pneumatic tire (2) according to claim 1, wherein the radius TR2 of the circular arc representing the middle portion (26m) is not less than half the radius TR1 of the circular arc representing the center portion (26c).

3. The pneumatic tire (2) according claims 1 or 2, wherein a ratio of a distance (WP1) in the axial direction from the equator (PE) of the tire to a boundary (P1) between the center portion (26c) and the middle portion (26m), to half the width (TW) of the tread (6), is not less than 0.32 and not greater than 0.43.

4. The pneumatic tire (2) according to any one of claims 1 to 3, wherein a ratio of a distance (WP2) in the axial direction from the equator (PE) of the tire (2) to a boundary between the middle portion (26m) and the side portion (26s), to half the width (TW) of the tread (6), is not less than 0.53 and not greater than 0.71.

5. The pneumatic tire (2) according to any one of claims 1 to 4, wherein a shape index of a ground-contact surface obtained when the tire (2) is mounted on the normal rim, an internal pressure of the tire is adjusted to the normal internal pressure, a normal load is applied to the tire (2), wherein a normal load means a load specified in the standard on which the tire (2) is based, and the tire (2) is brought into contact with a road surface at a camber angle of 0°, is represented by a ratio of a length of the ground-contact surface at an axial center of the ground-contact surface to a length of the ground-contact surface at a position at which a distance from the axial center of the ground-contact surface is 0.8 times a distance in an axial direction from the axial center of the ground-contact surface to an axially outer end of the ground-contact surface, and
the shape index is not less than 1.40 and not greater than 1.44.

## Patentansprüche

1. Luftreifen (2), umfassend:
eine Lauffläche (6), die mit einer Straßenoberfläche in Kontakt kommt;
ein Band (22), das sich radial innen von der Lauffläche (6) befindet; und
einen Gürtel (20), der sich radial innen von dem Band (22) befindet und mindestens zwei Schichten (46a, 46b) umfasst, die in einer radialen Richtung gestapelt sind, wobei
jede Schicht (46a, 46b), die in dem Gürtel (20) enthalten ist, eine große Anzahl von Gürtelkorden umfasst, die miteinander ausgerichtet sind,
das Band (22) einen Bandkord (52) umfasst, der sich im Wesentlichen in einer Umfangsrichtung erstreckt,
das Band (22) ein Vollband (48) ist, das eine Gesamtheit des Gürtels (20) bedeckt,
auf einem Querschnitt, entlang einer Ebene, die eine Drehachse umfasst, des Reifens (2) in einem Zustand, in dem der Reifen (2) auf eine normale Felge aufgezogen ist, ein Innendruck des Reifens (2) auf 10 % eines normalen Innendrucks eingestellt ist und keine Last auf den Reifen ausgeübt wird, wobei die normale Felge eine Felge bedeutet, die in einem Standard spezifiziert ist, auf dem der Reifen (2) basiert, und der normale Innendruck einen Innendruck bedeutet, der in dem Standard spezifiziert ist, auf dem der Reifen (2) basiert,
eine Außenumfangsfläche des Reifens (2) ein Profil aufweist, das radial nach außen konvex ist,
das Profil einen Zentralabschnitt (26c), der einen Äquator (PE) des Reifens (2) umfasst, ein Paar Mittelabschnitte (26m), die sich jeweils außen von dem Zentralabschnitt (26c) in einer axialen Richtung befinden, und ein Paar Seitenabschnitte (26s) umfasst, die sich jeweils außen von den Mittelabschnitten (26m) in der axialen Richtung befinden,
der Zentralabschnitt (26c) durch einen Kreisbogen dargestellt ist, der einen Radius TR1 aufweist, jeder der Mittelabschnitte (26m) durch einen Kreisbogen dargestellt ist, der einen Radius TR2 aufweist, der kleiner als der Radius TR1 ist, und jeder der Seitenabschnitte (26s) durch einen Kreisbogen dargestellt ist, der einen Radius TR3 aufweist, der kleiner als der Radius TR2 ist, und
ein Verhältnis des Radius TR1 des Kreisbogens, der den Zentralabschnitt (26c) darstellt, zu einer Breite (TW) der Lauffläche (6) nicht kleiner als 4,94 und nicht größer als 5,21 ist,
**dadurch gekennzeichnet, dass**
das Vollband (48) eine Breite aufweist, die größer als die Breite (TW) der Lauffläche (2) ist,
der Bandkord (52) ein Kord ist, der aus einer Polyethylenterephthalatfaser gebildet ist, und
eine Last bei 4% Dehnung des Bandkords (52) nicht kleiner als 60 N ist, wobei die Last bei 4% Dehnung jedes Bandkords (52) gemäß dem Testverfahren für "load at constant elongation", das in JIS L 1017 spezifiziert ist, gemessen ist.

2. Luftreifen (2) nach Anspruch 1, wobei der Radius TR2 des Kreisbogens, der den Mittelabschnitt (26m) darstellt, nicht kleiner als die Hälfte des Radius TR1 des Kreisbogens ist, der den Zentralabschnitt (26c) darstellt.

3. Luftreifen (2) nach Anspruch 1 oder 2, wobei ein Verhältnis eines Abstands (WP1) in der axialen Richtung von dem Äquator (PE) des Reifens zu einer Grenze (P1) zwischen dem Zentralabschnitt (26c) und dem Mittelabschnitt (26m) zu der Hälfte der Breite (TW) der Lauffläche (6) nicht kleiner als 0,32 und nicht größer als 0,43 ist.

4. Luftreifen (2) nach einem der Ansprüche 1 bis 3, wobei ein Verhältnis eines Abstands (WP2) in der axialen Richtung von dem Äquator (PE) des Reifens (2) zu einer Grenze zwischen dem Mittelabschnitt (26m) und dem Seitenabschnitt (26s) zu der Hälfte der Breite (TW) der Lauffläche (6) nicht kleiner als 0,53 und nicht größer als 0,71 ist.

5. Luftreifen (2) nach einem der Ansprüche 1 bis 4, wobei ein Formindex einer Bodenkontaktfläche, der erhalten wird, wenn der Reifen (2) auf die normale Felge aufgezogen ist, ein Innendruck des Reifens auf den normalen Innendruck eingestellt ist, eine normale Last auf den Reifen (2) ausgeübt wird, wobei eine normale Last eine Last bedeutet, die in dem Standard spezifiziert ist, auf dem der Reifen (2) basiert, und der Reifen (2) mit einer Straßenoberfläche in einem Sturzwinkel von 0° in Kontakt gebracht ist, durch ein Verhältnis einer Länge der Bodenkontaktfläche an einer axialen Mitte der Bodenkontaktfläche zu einer Länge der Bodenkontaktfläche an einer Position dargestellt ist, an der ein Abstand von der axialen Mitte der Bodenkontaktfläche das 0,8-fache eines Abstands in einer axialen Richtung von der axialen Mitte der Bodenkontaktfläche zu einem axial äußeren Ende der Bodenkontaktfläche beträgt, und
der Formindex nicht kleiner als 1,40 und nicht größer als 1,44 ist.

## Revendications

1. Bandage pneumatique (2) comprenant :
une bande de roulement (6) qui vient en contact avec une surface routière ;
une bande (22) située radialement à l'intérieur de la bande de roulement (6) ; et
une ceinture (20) située radialement à l'intérieur de la bande (22) et incluant au moins deux couches (46a, 46b) empilées dans une direction radiale, dans lequel
chaque couche (46a, 46b) incluse dans la ceinture (20) inclut un grand nombre de câblés de ceinture alignés les uns avec les autres,
la bande (22) inclut un câblé de bande (52) s'étendant sensiblement dans une direction circonférentielle,
la bande (22) est une bande complète (48) qui recouvre une totalité de la ceinture (20),
sur une section transversale, le long d'un plan incluant un axe de rotation, du pneumatique (2) dans un état dans lequel le pneumatique (2) est monté sur une jante normale, une pression interne du pneumatique (2) est ajustée sur 10 % d'une pression interne normale, et aucune charge n'est appliquée sur le pneumatique, la jante normale signifiant une jante spécifiée dans un standard sur lequel le pneumatique (2) est basé et la pression interne normale signifiant une pression interne spécifiée dans le standard sur lequel le pneumatique (2) est basé,
une surface circonférence extérieure du pneumatique (2) a un profil qui est convexe radialement vers l'extérieur,
le profil inclut une portion centrale (26c) incluant un équateur (PE) du pneumatique (2), une paire de portions médianes (26m) situées chacune à l'extérieur de la portion centrale (26c) dans une direction axiale, et une paire de portions latérales (26s) situées à l'extérieur des portions médianes (26m) dans la direction axiale, respectivement,
la portion centrale (26c) est représentée par un arc circulaire ayant un rayon TR1, chacune des portions médianes (26m) est représentée par un arc circulaire ayant un rayon TR2 plus petit que le rayon TR1, et chacune des portions latérales (26c) est représentée par un arc circulaire ayant un rayon TR3 plus petit que le rayon TR2, et
un rapport du rayon TR1 de l'arc circulaire représentant la portion centrale (26c) sur une largeur (TW) de la bande de roulement (6) n'est pas inférieur à 4,94 et n'est pas supérieur à 5,21,
**caractérisé en ce que**
la bande complète (48) a une largeur plus grande que la largeur (TW) de la bande de roulement (2),
le câblé de bande (52) est un câblé formé à partir d'une fibre en polyéthylène téréphtalate, et
une charge à 4 % d'allongement du câblé de bande (52) n'est pas inférieure à 60 N, la charge à 4 % d'allongement de chaque câblé de bande (52) étant mesurées en accord avec la méthode d'essai « load at constant elongation » (charge à allongement constant) spécifiée dans la norme industrielle japonaise JIS L 1017.

2. Bandage pneumatique (2) selon la revendication 1, dans lequel le rayon TR2 de l'arc circulaire représentant la portion médiane (26m) n'est pas inférieur à la moitié du rayon TR1 de l'arc circulaire représentant la portion centrale (26c).

3. Bandage pneumatique (2) selon la revendication 1 ou 2, dans lequel un rapport d'une distance (WP1) dans la direction axiale depuis l'équateur (PE) du pneumatique jusqu'à une frontière (P1) entre la portion centrale (26c) et la portion médiane (26m), sur la moitié de la largeur (TW) de la bande de roulement (6), n'est pas inférieur à 0,32 et n'est pas supérieur à 0,43.

4. Bandage pneumatique (2) selon l'une quelconque des revendications 1 à 3, dans lequel un rapport d'une distance (WP2) dans la direction axiale depuis l'équateur (PE) du pneumatique (2) jusqu'à une frontière entre la portion médiane (26m) et la portion latérale (26s), sur la moitié de la largeur (TW) de la bande de roulement (6), n'est pas inférieur à 0,53 et n'est pas supérieur à 0,71.

5. Bandage pneumatique (2) selon l'une quelconque des revendications 1 à 4, dans lequel un indice de forme d'une surface de contact au sol, obtenu quand le pneumatique (2) est monté sur la jante normale, une pression interne du pneumatique est ajustée sur la pression interne normale, une charge normale est appliquée sur le pneumatique (2), une charge normale signifiant une charge spécifiée dans le standard sur lequel le pneumatique (2) est basé, et le pneumatique (2) est amené en contact avec une surface routière sous un angle de cambrure de 0°, est représenté par un rapport d'une longueur de la surface de contact au sol au niveau d'un centre axial de la surface de contact au sol sur une longueur de la surface de contact au sol à une position à laquelle une distance par rapport au centre axial de la surface de contact au sol est 0,8 fois une distance dans une direction axiale depuis le centre axial de la surface de contact au sol jusqu'à une extrémité axialement extérieure de la surface de contact au sol, et
l'indice de forme n'est pas inférieur à 1,40 et n'est pas supérieur à 1,44.
